# EUROPEAN PATENT APPLICATION

(11) **EP 0 676 549 A1**
(43) Date of publication of application: **11.10.1995**
(21) Application number: 95301352.1
(22) Date of filing: 02.03.1995
(51) Int. Cl.: F15B 15/22, C03B 9/40, C03B 9/16

(54) **Piston and cylinder devices**

(30) Priority: 09.03.1994 GB 9404539
(71) Applicant: Emhart Glass Machinery Investments Inc., Wilmington, Delaware 19801 (US)
(72) Inventor: Diehm, L., CH-6330 Cham (CH); Corves, B., CH-6300 Zug (CH)
(74) Representative: Stagg, Diana Christine

(57) **Abstract**

A load bearing piston and cylinder device (50) for use with low pressure air, particularly in glassware manufacturing machines, is provided with a bypass (52) which, at some stage in the movement of the piston (48), interconnects opposite sides of the piston to enable the passage of air from one side to the other. By appropriate positioning of the bypass (52), movement of the piston (48) can be made more uniform, cycle time can be reduced and cushioning improved. On-off valves and one way valves may be positioned in the bypass if required.

## Description

This invention is concerned with piston and cylinder devices adapted for use in glassware forming machines.

Compressed air is frequently used for operating mechanisms on glassware forming machines, but almost invariably the compressed air available is at a comparatively low pressure, by which we mean a pressure of less than 4.0 bar. In fact glass factories almost invariably have a supply of compressed air at 3.2 bar. The mechanisms which are operated by compressed air in glassware forming machines, e.g. the baffle, the funnel, the blowhead and the takeout mechanisms in an I.S. machine, require a fairly long vertical stroke and also frequently require a substantial downward static force to be exerted. Consequently a piston and cylinder device for use with such mechanisms requires a long cylinder, to give the required length of stroke, and a piston of substantial diameter, to give the substantial static force. Vertical Piston and cylinder devices operating at low pressure and having a long stroke and a substantial diameter are particularly prone to develop, at some stage in their operation, an oscillatory movement. Such movements are highly undesirable, not only for the wear they may cause to the operating parts but also for the limitations which they impose on the speed of operation of the piston and cylinder device. For example, if a piston and cylinder device is arranged vertically, with the piston in an uppermost position, a lower chamber of the cylinder being connected to a supply of compressed air and an upper chamber of the pistons connected to exhaust, downward movement of the piston will be generated by connecting the lower chamber to exhaust and the upper chamber to the air supply. Movement downwards of the piston then begins, but two effects may then occur. The venting of air from the lower chamber is dependent on the rate at which air can exhaust from the chamber, which is determined by the geometry of the system, and frequently the piston will move faster than air can be exhausted from the lower chamber, thus causing a momentary increase of pressure in the lower chamber and a consequent slowing down of the piston. A similar effect may occur in the upper chamber, in that the piston may move at a speed which is such that the volume of the upper chamber increases at a rate larger than that at which compressed air can be supplied to the upper chamber, thus causing a reduction of pressure in the upper chamber and a consequent slowing down of the piston. These two effects reinforce each other, and mean that the piston slows down during its downward stroke after an initial movement and then speeds up again. It can be seen that this results in the movement of the piston being irregular and that its speed is less than the theoretical maximum.

Similar effects can occur at other stages in the movement in the piston cylinder, particularly towards the end of a stroke.

It is one of the objects of the present invention to provide an improved vertical piston and cylinder device which operates with low pressure air, that is to say air with a pressure less than 4.0 bar.

The present invention provides a vertical piston and cylinder device adapted for use with low pressure air and comprising
a cylinder having a first, upper, end and a second, lower, end a piston mounted for movement in the cylinder between an upper position adjacent the upper end of the cylinder and a lower position adjacent the lower end of the cylinder and dividing the cylinder into two chambers, a first chamber between the upper end of the cylinder and the piston and a second chamber between the lower end of the cylinder and the piston
a first air supply passage leading into the first chamber
a second air supply passage leading into the second chamber
a valve which in a first position connects the first air supply passage to a supply of compressed air and the second air supply passage to exhaust, and in a second position connects the first air supply passage to exhaust and the second air supply passage to the supply of compressed air characterised in that the device comprises
a bypass comprising two openings leading to the cylinder, which openings are spaced apart by a distance greater than the thickness of the piston so that for a period of time when the piston is moving between its upper and its lower positions, the bypass interconnects the first and second chambers.
There now follows a description, to be read with reference to the accompanying drawings, of several piston and cylinder devices embodying the invention.

In the accompanying drawings
Figure 1 shows, diagrammatically, a simple vertical piston and cylinder device of known construction.
Figure 2 shows, diagramatically, a piston and cylinder device corresponding to Figure 1 but including a bypass;
Figure 3 shows, diagramatically, a piston and cylinder device similar to Figure 2 but including valves in the bypass;
Figure 4 shows diagramatically a piston and cylinder device having two bypasses;
Figure 5 is a graph showing typical variations of pressure with time in a known piston and cylinder device as shown in Figure 1;
Figure 6 is a graph showing typical variations of pressure with time in a piston and cylinder device with a bypass as shown in Figure 2;
Figure 7 shows diagramatically a simple piston and cylinder device with a cushioning arrangement of known construction;
   Figure 8 shows, diagramatically, a cushioning arrangement incorporating a bypass
Figure 9 shows, diagrammatically, a baffle mechanism operated by a piston and cylinder device incorporating a bypass;
   Figures 10, 11 and 12 illustrate the operation of a first example of a piston and cylinder device incorporating a bypass;
   Figures 13, 14, 15, 16 and 17 illustrate the operation of a second example;
   Figures 18 and 19 illustrate the operation of a third example.

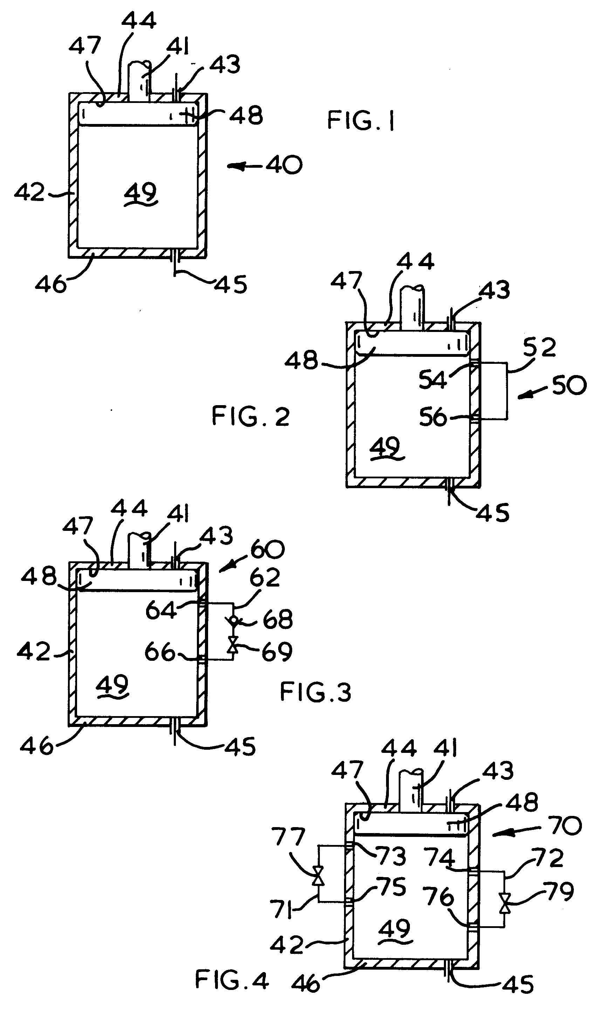

The known vertical piston and cylinder device 40 shown diagramatically in Figure 1, comprises a cylinder 42 having a first upper end 44 and a second lower end 46. A piston 48 is mounted on a piston rod 41 and is movable between a first upper position (as shown in the Figure) adjacent the first end 44 of the cylinder, and a second, lower position adjacent the second end 46.

The piston divides the cylinder into a first upper, chamber 47 and a second, lower, chamber 49. (The chamber 47 is of minimal size when the piston 48 is in its upper position). The piston is load bearing but the load is not shown.

An inlet 43 of a first supply passage leads into the upper chamber 47, and an inlet 45 of a second supply passage leads into the lower chamber 49. The inlets 43 and 45 are connected to a valve (not shown) which in a conventional manner when in a first position connects the first supply passage to a supply of low pressure compressed air and the second supply passage to exhaust, and the second position connects the first supply passage to exhaust and the second supply passage to the supply of compressed air
The piston and cylinder devices 50, 60, and 70 shown diagrammatically in Figures 2,3 and 4 resemble the device 40 but are provided with bypasses. The same numbers are use to indicate the parts which are common to the device 40 and the devices 50, 60, and 70.

The vertical piston and cylinder device 50 (figure 2) comprises a simple bypass 52 which opens into the cylinder at an upper opening 54 and at a lower opening 56, the openings 54 and 56 being spaced apart a distance greater than the thickness of the piston 48.

The piston and cylinder device 60 (figure 3) comprises a bypass 62 which opens into the cylinder at an upper opening 64 and at a lower opening 66 and is provided with a one way valve 68 and an on-off valve 69.

The piston and cylinder device 70 (figure 4) comprises a first bypass 72, which opens into the cylinder at an upper opening 74 and a lower opening 76, and is provided with an on-off valve 79, and a second bypass 71 which opens into the cylinder at an upper opening 73 and a lower opening 75 and is provided with an on-off valve 77. The opening 73 is positioned above the opening 74 and the opening 75 between the levels of the openings 74 and 76.

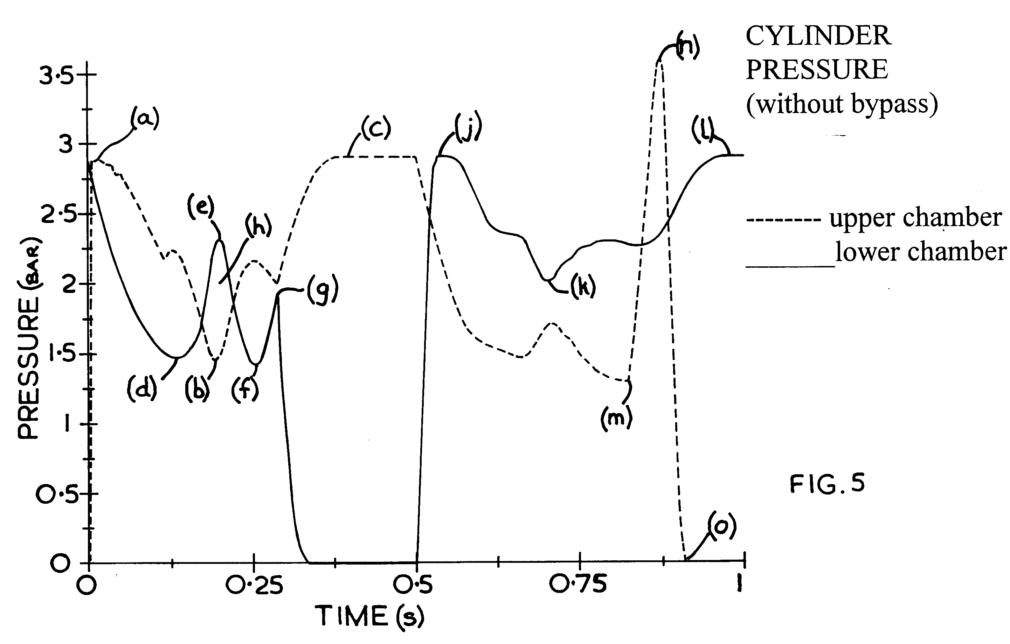

Figure 5 shows the typical variation in pressure with time in the known piston and cylinder device 40 using a supply of compressed air at a pressure of about 2.85 bar.

At time 0, the piston 48 is in its uppermost position, and pressure in the lower chamber 49 is at a maximum, while the upper chamber 47 is vented to atmosphere. To begin the down stroke, the lower chamber 49 is vented to atmosphere through the inlet 45, and compressed air is admitted to the upper chamber 47 through the inlet 43.

In the upper chamber 47, the pressure quickly rises to its maximum (a) and the piston 48 begins to move. The piston 48 moves somewhat faster than compressed air can be supplied to the upper chamber through the inlet 43, and the pressure in the chamber 47 falls to a minimum (b) after about 0.19 seconds. It then rises, somewhat irregularly, to the maximum, line pressure (c)

In the lower chamber 49, as soon as the chamber is vented, the pressure begins to fall, reaching a minimum (d) after about 0.13 seconds. It then rises to a maximum (e) at about 0.2 seconds, falls to a second minimum (f) at about 0.25 seconds, rises to a lower maximum (g) at about 0.28 seconds and then falls to zero.

It is believed that what is happening in the piston and cylinder device 40 is that from the point (a) to the point (b) the piston 48 is moving downwards to enlarge the upper chamber 47 at a rate faster than the supply of compressed air can fill it so the pressure falls. Similarly from point (d) to point (e), the piston 48 is moving downwards to reduce the volume of the lower chamber 49 faster than air can be vented from it through the inlet 45, and so the pressure in the lower chamber 49 rises. For a short period of time, (the enclosed portion (h) on the graph) a reverse pressure is established, i.e. pressure in the lower chamber 49 is higher than pressure in the upper chamber 47, and movement of the piston 48 is slowed down. After a further fluctuation in the pressures, pressure in the lower chamber 49 moves to zero, while that in the upper chamber 47 moves up to maximum, line pressure.

On the reverse, upward, stroke, similar phenomena occur but of course the pressure in the lower chamber 49 is acting against the gravitational load. To perform the upward stroke, air is vented from the upper chamber 47 and compressed air admitted to the lower chamber 49. The pressure in the lower chamber 49 quickly rises to a maximum (j), then falls to a minimum (k) and returns to a maximum (l). The pressure in the upper chamber 47 falls, fairly steadily, to a minimum (m), then rises to a peak (n) and falls to zero (o).

It will be understood that this curve is a typical one chosen for illustration: the actual curve will depend amongst other things on the physical features of the piston and the cylinder device 40, particularly the sizes of the air inlets 43 and 45, the applied load and the air pressure.

It will also be understood that the variations of pressure on the down stroke in particular are undesirable. Not only does the reverse pressure (h) slow down movement of the piston 48, thus increasing the cycle time of the piston and cylinder device 40, but also the pressure variations cause irregular movement of the piston 48 which can cause undesirable oscillation of a mechanism being operated.

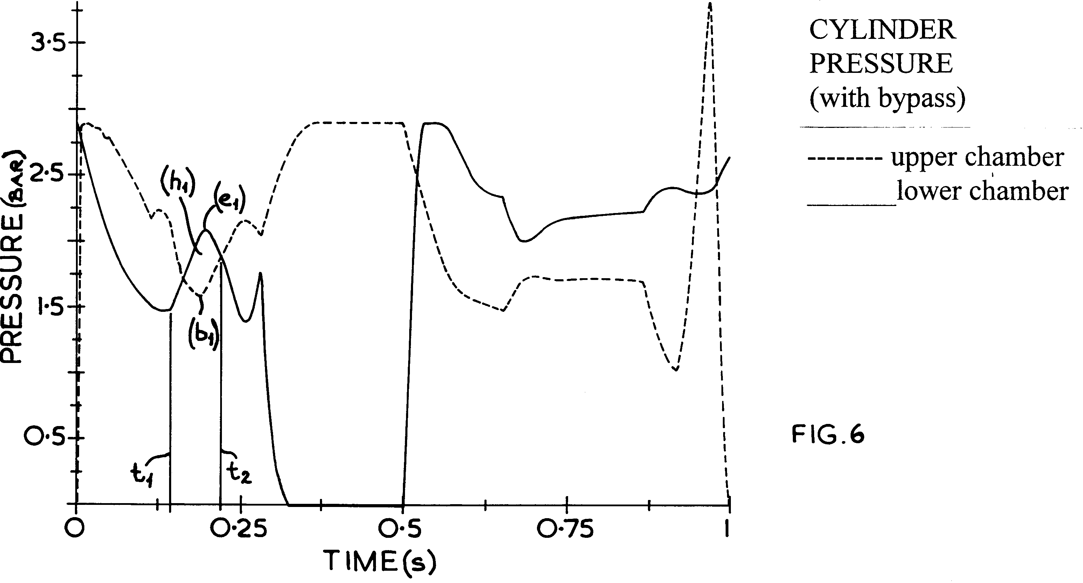

Figure 6 illustrates the typical pressure variation with time under similar conditions as figure 5 in the piston and cylinder device 50 (Figure 2) comprising the bypass 52 which interconnects the upper and the lower chambers 47 and 49 during the stroke of the piston 48. Movement of the piston 48 in its down stroke opens the bypass 52 at a time t, (about 0.15 secs) and closes it at a time t₂ (about 0.22 secs), In the upstroke, movement of the piston 48 opens the bypass 52 at a time 1-t₂ (about 0.78 secs) and closes it at a time 1-t, (about 0.85 secs). Thus the bypass opens, on the down stroke, just before the reversed pressure is established and closes when the reversed pressure ceases.

This opening and closing of the bypass is effected by appropriate positioning of the connections 54 and 56 of the bypass 52 - i.e. the piston movement opens and closes the bypass at the correct time. Alternatively the opening and closing of the bypass may be effected by a timed on-off valve, the timing either being effected by a timing device or mechanically from the movement of the piston. Alternatively, as shown in Figure 3 the bypass 62 may incorporate an on-off valve 69 together with a one way valve 68. If the on-off valve 69 is open during the down stroke, the one way valve will effectively open the bypass immediately a reverse pressure is established, and will close it once the reverse pressure ceases, while, if desired, the bypass 62 may be closed throughout the upstroke.

The effect of the bypass 52 on the down stroke can be seen by a comparison of Figures 5 and 6. With the bypass 52, the pressure in the lower chamber 49 rises to a peak e₁, which is lower than the peak e, and the pressure in the upper chamber 47 falls to a minimum b₁, which is greater than the minimum b. The degree of reverse pressure generated in the down stroke is thus greatly reduced - in the example shown from about 0.87 bar without bypass to about 0.5 bar.

On the up stroke in the case of the device 50, the bypass 52 opens and closes at the same points in the movement of the piston 48, but as reverse pressure only develops towards the end of the stroke, the opening of the bypass has comparatively little effect on the pressures developed in the two chambers.

It would of course be possible to provide a long bypass with an on-off valve and to time the opening and closing of the bypass on the up stroke differently from that on the down stroke, thus to control the reverse pressure developed towards the end of the up stroke.

Alternatively, as shown in Figure 4, two bypasses 71 and 72 can be provided, each with an on-off valve, the valve 79 in the bypass 72 being open on the down stroke and the valve 77 in the bypass 71 on the upstroke, thus to provide an effective bypass at the desired points in both the upstroke and the down stroke.

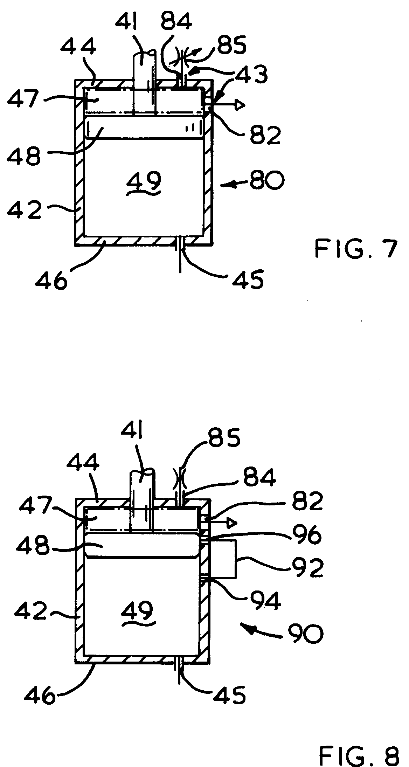

Figures 7 and 8 show two further piston and cylinder devices 80, 90, which again have certain parts in common with the device 40. These devices 80 and 90 illustrate the use of a bypass for a purpose other than to reduce reverse pressure effects.

Figure 7 shows a conventional cushioning arrangement at the upper end of a conventional vertical piston and cylinder device 80 comprising a piston head 48 and a cylinder 42. The inlet 43 into the upper chamber 47 comprises a wide air passage 82 in a wall of the cylinder 42 and a narrow air passage 84 in the upper end wall of the cylinder 42, which passages act as air inlets on the down stroke and as exhausts on the up stroke. The air passage 82 is spaced downwardly from the end of the cylinder 42: the air passage 84, positioned in the upper end 44 of the cylinder 42, comprises a restrictor valve 85. When this device 80 operates, upward movement of the piston 48 towards the end of its stroke covers the air passage 82 so that air can no longer exhaust through it, and air then escapes through the passage 84, its rate of escape being controlled by the restrictor valve 85. Thus the end of the upward stroke is effectively cushioned.

While this cushioning is satisfactory in certain circumstances, it will be realized the cushioning is restricted by the fact that the passage 82 cannot be positioned further from the end 44 of the cylinder than the thickness of the piston 48 - were it to be so, the passage 82 would be uncovered by the piston 48 passing it before the upstroke is completed, thus connecting the underside of the piston 48 to exhaust.

Figure 8 shows a similar piston and cylinder device 90, provided additionally with a bypass 92 opening into the cylinder at a lower opening 94 and at an upper opening 96.

In the device 90, motion of the piston 48 is identical with that of the device 80 in the upstroke until the piston 48 passes the lower opening 94. The bypass 92 then connects the pressurized, lower chamber 49 of the device to the, vented, upper chamber 47. This provides for the passage of air under pressure through the bypass 92 from the lower chamber 49 to the upper chamber 47, thus reducing the rate at which venting through the air passage 82 reduces the pressure in the upper chamber 47. The piston 48 then moves up to close the bypass 92 by covering the opening 96, and the bypass ceases to operate, but the quantity of air in the upper chamber 47 and thus the cushioning effect on the piston 48 when the piston closes the air passage 82 is increased.

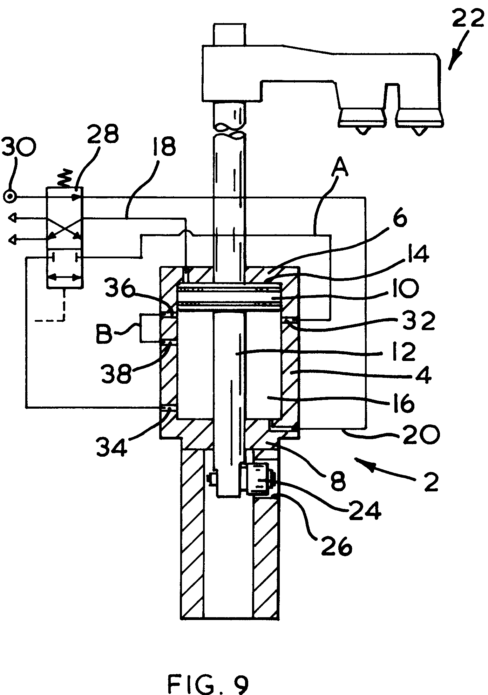

The application of a piston and cylinder device incorporating a bypass will now be described as applied to a baffle mechanism in a glass machine [Figure 9]. It will be understood that such a device could also be applied to funnel, blowhead on similar machanism.

The baffle mechanism shown diagrammatically in Figure 9 incorporates a piston and cylinder device 2 according to the invention.

The piston and cylinder device 2 comprises a cylinder 4 having a first, upper end 6 and a second, lower, end 8. A piston 10 is mounted on a piston rod 12 and is movable between a first, upper position, as shown in Figure 1, adjacent the first end 6 of the cylinder, and a second, lower position adjacent the second end 8, of the cylinder, and divides the cylinder into two chambers an upper chamber 14 between the piston 10 and the first end 6 of the cylinder and a second, lower chamber 16 between the second end 8 and the piston 10. A first supply passage 18 leads into the first chamber 14 through the end 6, a second supply passage 20 leads into the second chamber 16 through the end 8.

The piston rod 12 supports on an upper end portion a baffle assembly 22, and on a lower end portion a cam roll 24 which runs in a cam track 26 which is arranged, in a well known manner, so that on movement of the piston 10 between its first and its second positions, the baffle assembly 22 moves downwardly and also radially about the axis of the piston rod 12.

The piston and cylinder device 2 comprises a valve 28 which in a first position connects the supply passage 18 to a supply of compressed air 30 and the supply passage 20 to exhaust, and in a second position (as shown in Figure 9) connects the supply passage 18 to exhaust and the supply passage 20 to the supply 30.

The piston and cylinder device is shown, diagrammatically, comprising two bypass passages A and B which are each arranged, for a period of time when the piston is moving between its first and second positions, to interconnect the first upper and second lower chambers.

The bypass passage A comprises a first opening 32 in the cylinder 4 which is positioned close to the under surface of the piston 10 when the piston 10 is in its first, upper, position, and leads through the valve 28 to a second opening 34 in the cylinder 4 positioned to be closed by the piston 10 when the piston is in its second lower position. As the bypass A is open when the valve 28 is in its first position and is closed when the valve 28 is in its second position, it is only operative when the piston is moving downwards from its first position to its second position.

The bypass passage B comprises a first opening 36 which is positioned close to the under surface of the piston 10 when the piston is in its first position and a second opening 38 which is spaced downwardly from the opening 36 by an amount a little greater than the thickness of the piston 10. Thus the bypass B will connect the two sides of the piston 10 for a short time at the beginning of the down stroke, and again for a short time prior to completion of the up stroke.
In the arrangement shown in Figure 9, the effect of bypass A is to increase the speed of the piston in the downstroke, and also to provide a small improvement in angular vibration on the downstroke. The effect of bypass B is to reduce angular vibrations at the end of the upstroke.

The effect of the bypass in certain vertical piston and cylinder arrangements will now be described. In all cases the air is supplied at a pressure of less than 4.0 bar.

### Example I

Piston stroke 138 mm [second, lower position =0]
Bypass opens (down stroke) 112 mm
Bypass closes (down stroke) 87 mm.
Pressure - 3.25 bar

In this first example of a piston and cylinder device incorporating a bypass the bypass opens and closes on both upstroke and downstroke - it will be understood that when it opens and closes on the downstroke it will close and open on the upstroke.

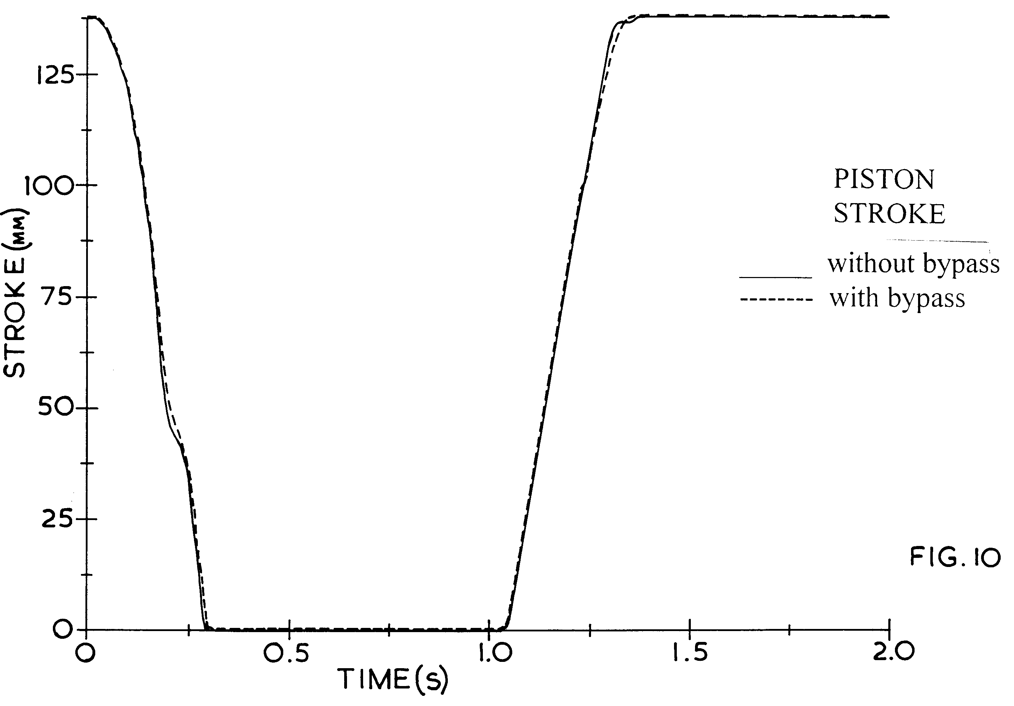

Figure 10 shows a graph of the piston movement against time, with and without the bypass. It can be seen that the operation of the bypass causes a smoothing of the downstroke of the piston, and reduces the oscillation of the piston on its return to its uppermost position.

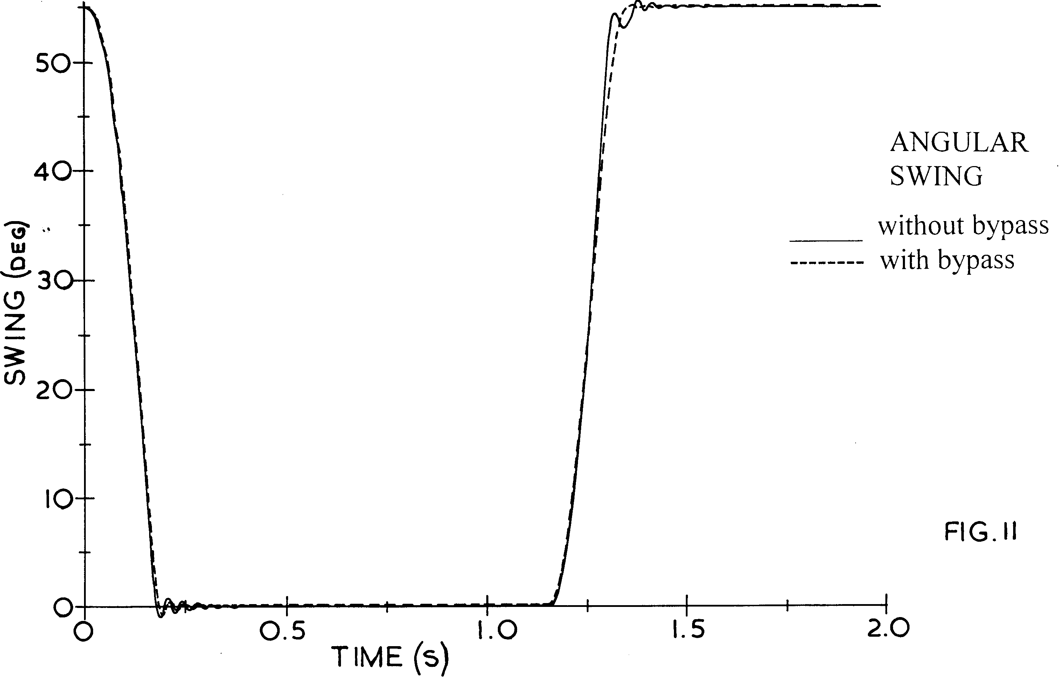

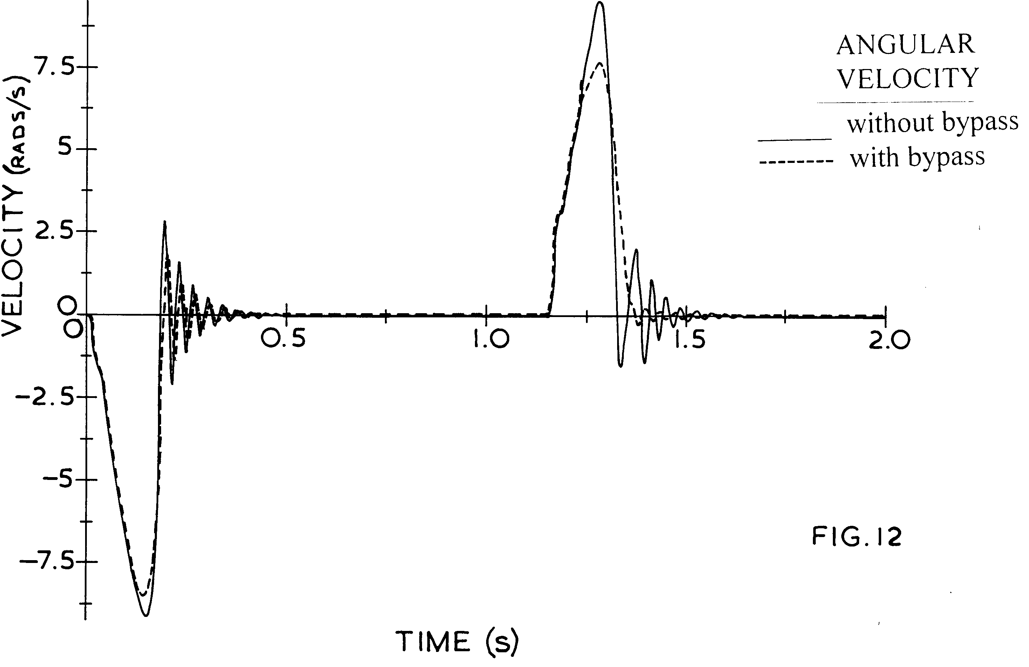

Figures 11 and 12 show the effect of the bypass on the angular movement of the baffle arm - Figure 11 showing the angular swing. It can be seen from Figure 11 that the damping of the angular swing is slightly improved on the downstroke, but much improved, in fact almost eliminated, on the upstroke. Figure 12 illustrates the same effect by reference to the angular velocity.

### Example II

Piston stroke 138 mm
Bypass opens (downstroke) 112 mm
Bypass closes (downstroke) 77 mm.
Pressure - 3.25 bar

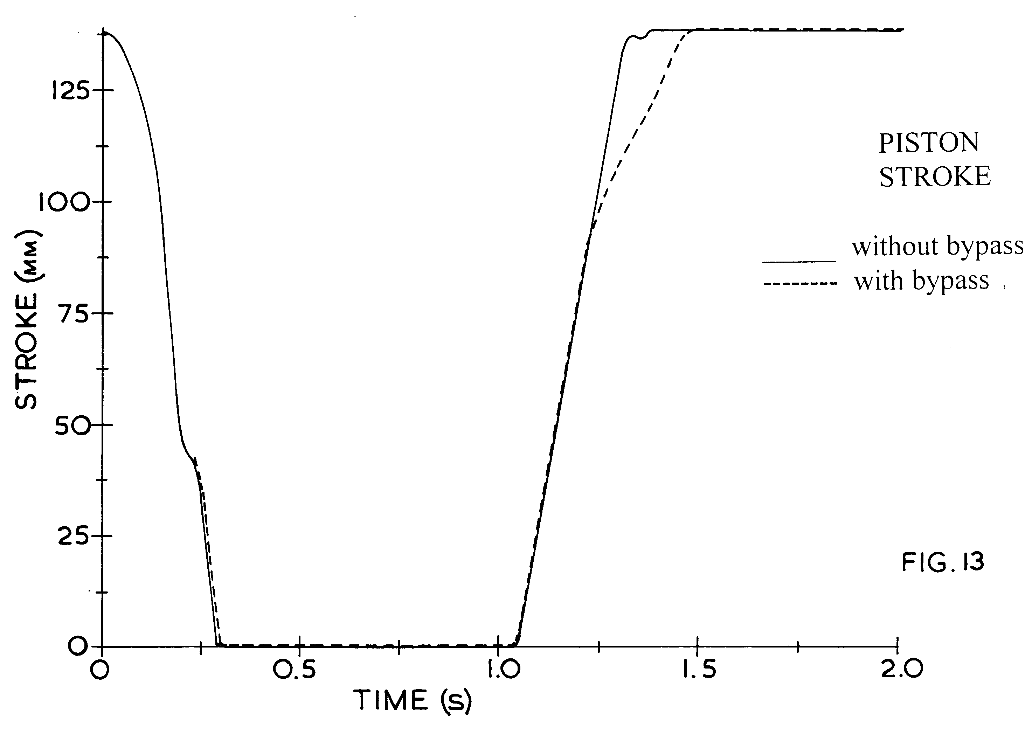

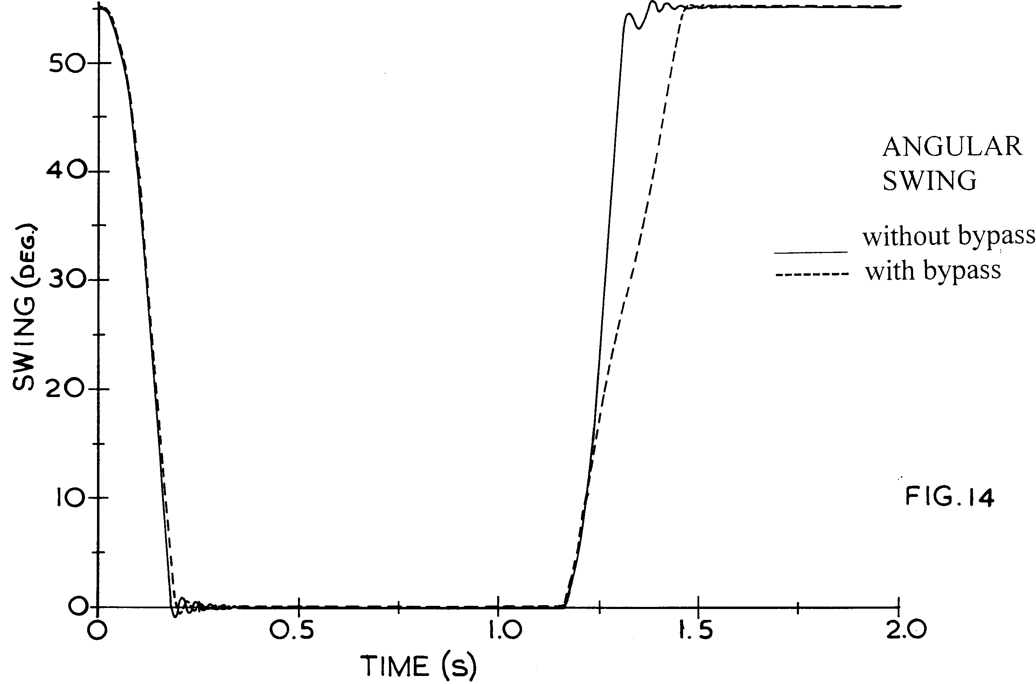

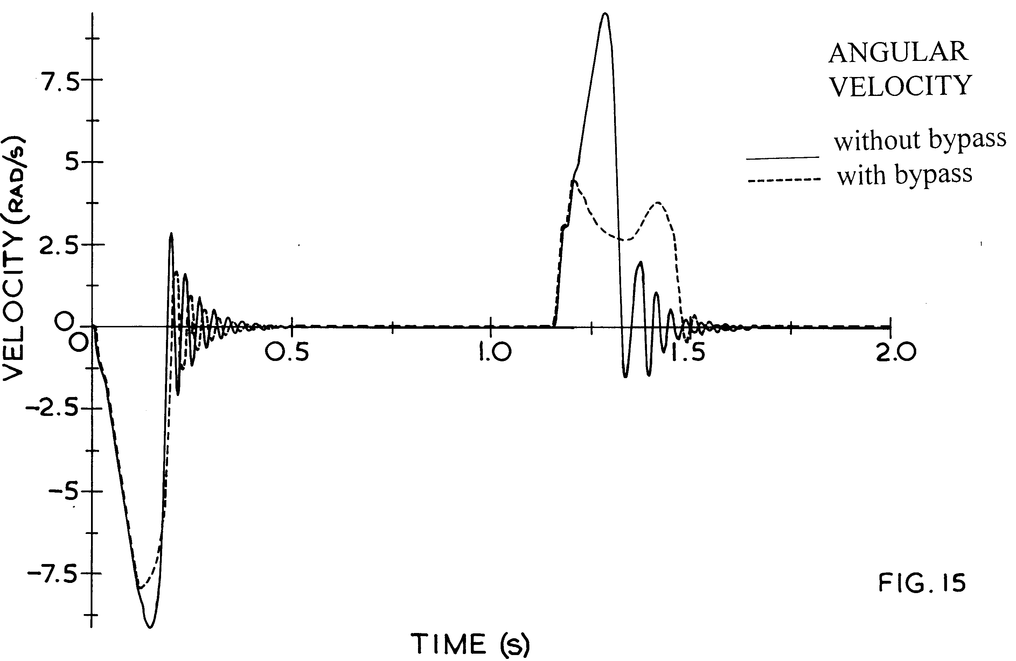

In this second example of a piston and cylinder device incorporating a bypass Figure 13 corresponds to Figure 10, and shows that the longer bypass slows down the return movement of the piston, but totally eliminates oscillation in this return movement. Figures 14 and 15 correspond to Figures 11 and 12 and show the greatly improved movement of the baffle arm on the upstroke of the piston.

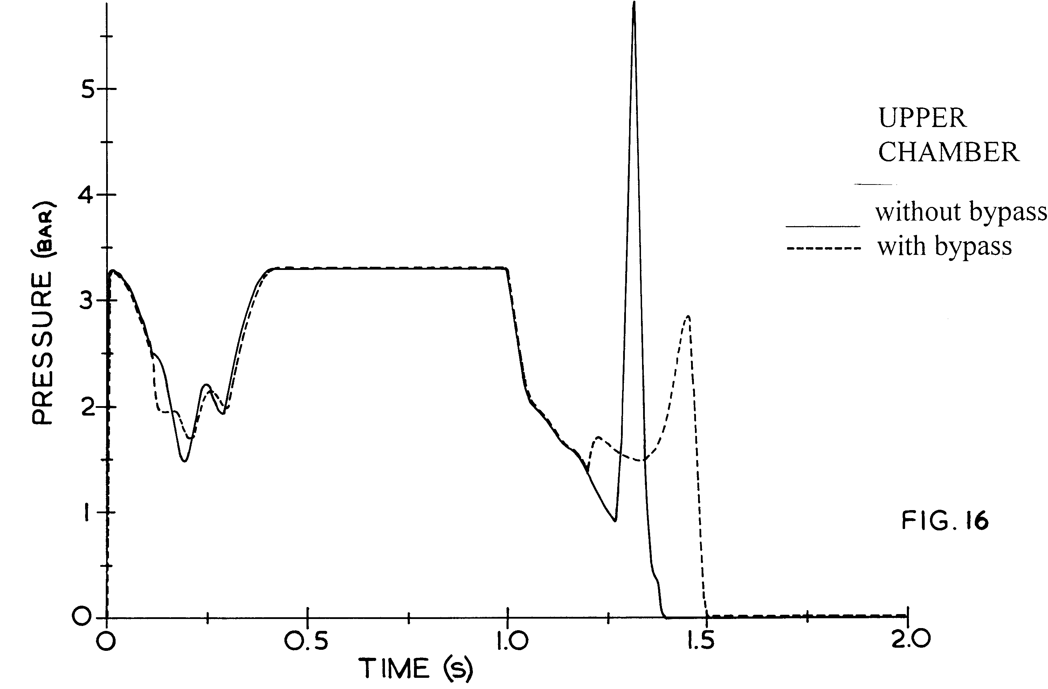

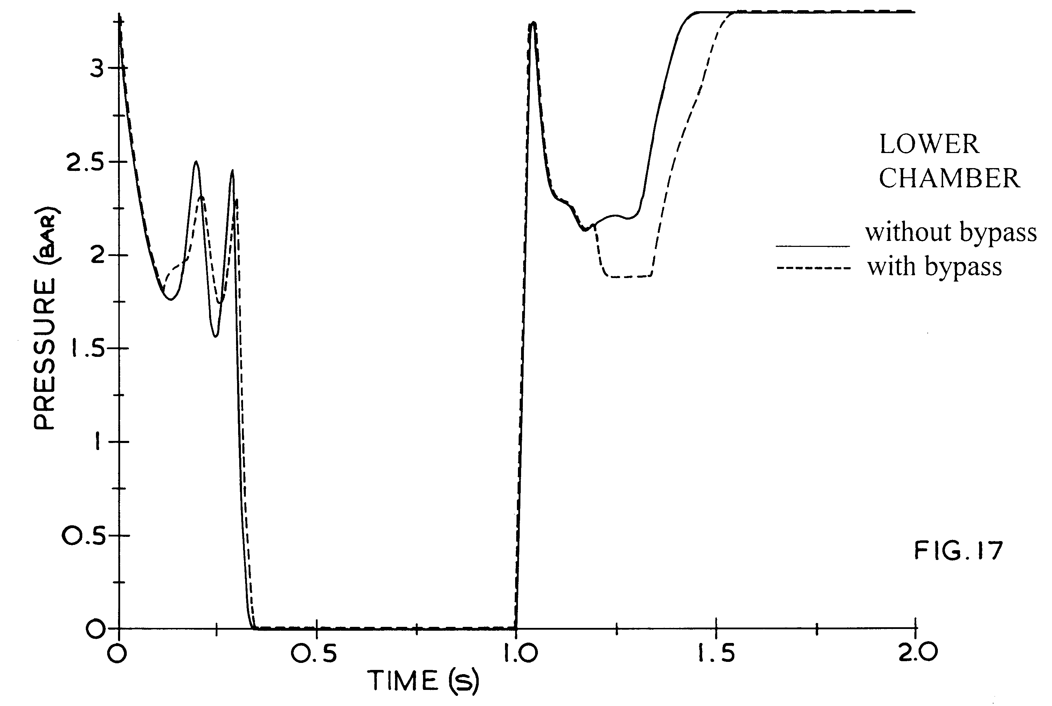

Figures 16 and 17 show the effect of the bypass on the pressure in the upper and lower chambers of the piston and cylinder device, in particular the elimination of a peak 'over pressure' in the upper chamber on the return stroke of the piston and a significant reduction in pressure oscillation during both up and down stroke.

### Example III

Piston stroke 138 mm
Bypass opens (downstroke) 114 mm.
Bypass closes (downstroke)104 mm.
Pressure - 3.25 bar
This third example of a piston and cylinder device incorporating a by pass shows how a short bypass can operate to reduce the cycle time of the device,

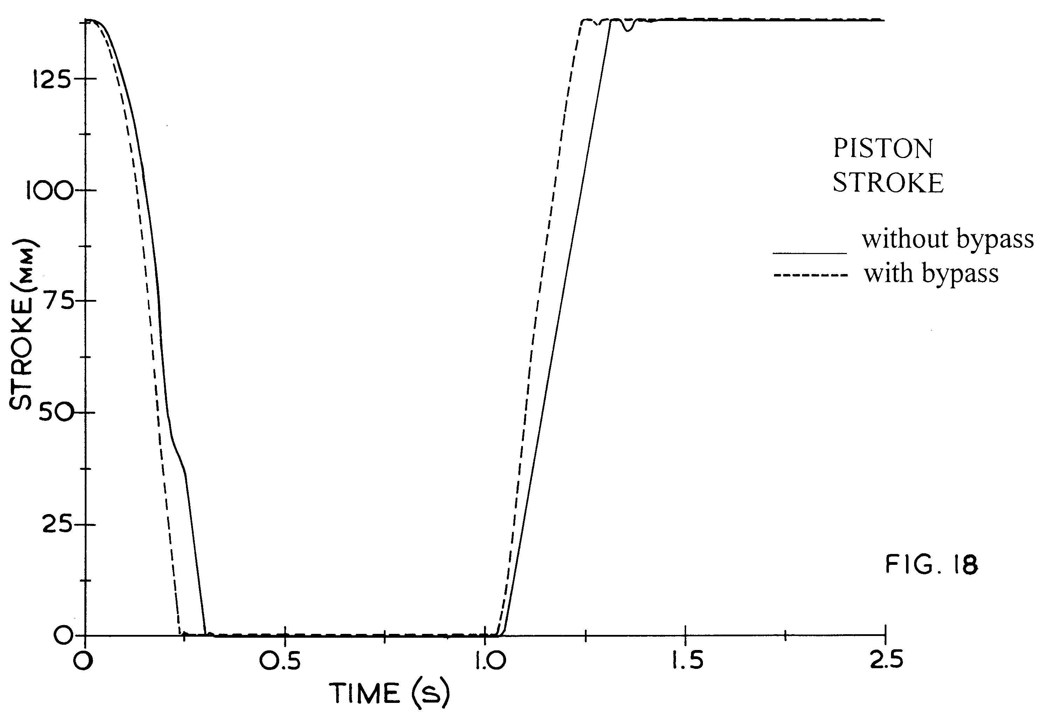

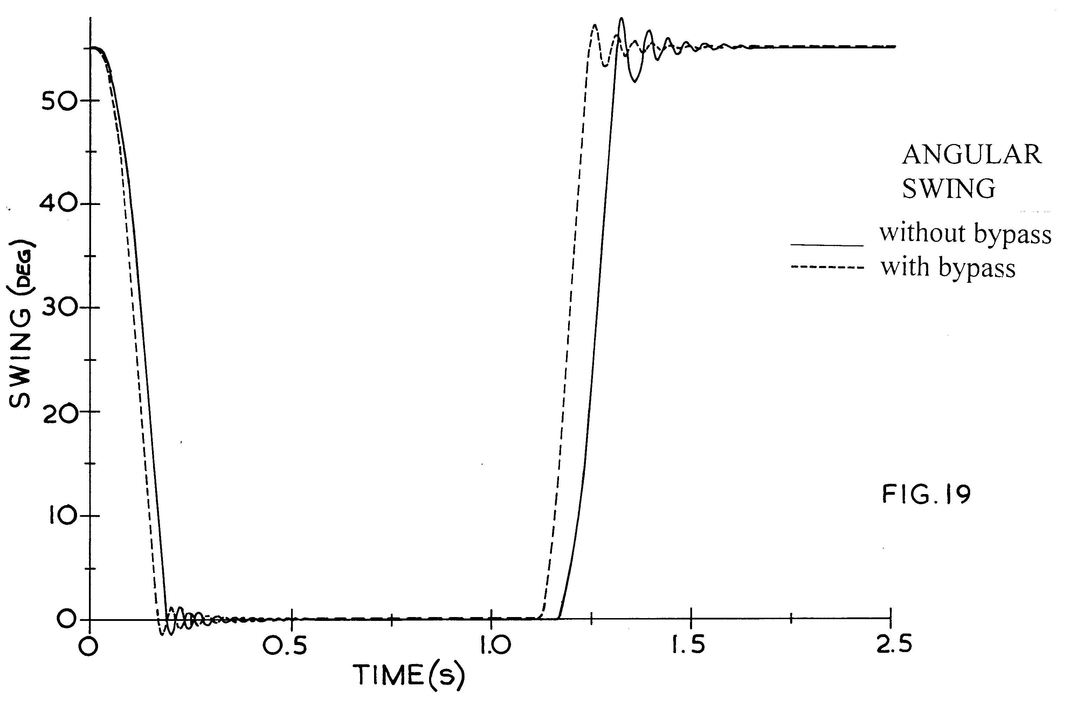

Figure 18 demonstrates how the time to complete the downstroke is reduced by about 20%, and the time to complete the upstroke by about 23%. This time reduction is achieved at the expense of losing the reduction of the oscillation of the swinging movement of the baffle arm at the end of its movement, as is shown by Figure 19.

## Claims

1. A vertical piston and cylinder device adapted for use with low pressure air and comprising
a cylinder having a first upper end and a second lower end
a piston mounted for movement in the cylinder between an upper position adjacent the upper end of the cylinder and a lower position adjacent the lower end of the cylinder and dividing the cylinder into two chambers, a first chamber between the upper end of the cylinder and the piston and a second chamber between the lower end of the cylinder and the piston.
a first air supply passage leading into the first chamber
a second air supply passage leading into the second chamber
a valve which in a first position connects the first air supply passage to a supply of compressed air and the second air supply passage to exhaust, and in a second position connects the first air supply passage to exhaust and the second air supply passage to the supply of compressed air, characterised in that the device comprises .
a bypass comprising two openings leading to the cylinder, which openings are spaced apart by a distance greater than the thickness of the piston so that for a period of time when the piston is moving between its upper and its lower positions, the bypass interconnects the first and second chambers.

2. A piston and cylinder device according to claim 1 wherein an on-off valve is positioned in the bypass.

3. A piston and cylinder device according to claim 2 wherein a oneway valve is also positioned in the bypass.

4. A piston and cylinder device according to claim 1 comprising two such bypasses.

5. A piston and cylinder device according to claim 4 wherein each bypass is provided with an on-off valve.

6. A piston and cylinder device according to claim 1 wherein one of the air supply passages is located in a wall of the cylinder near to one end of the cylinder so that it is closed by the piston when the piston is in its position close to that end of the cylinder, and a further air passage is provided in the end of the cylinder and comprises a restrictor valve, the bypass being positioned so that it interconnects the two chambers shortly before the piston moves towards the end of the cylinder to close said one air supply passage.

7. A piston and cylinder device according to claim 1 wherein the bypass is connected to the valve so that when the valve is in its first position the bypass is open and when it is in its second position the bypass is closed.

8. An operating mechanism in a glass machine for a baffle, funnel, blowhead or the like comprising a piston and cylinder device according to any one of the preceding claims.
